# EUROPEAN PATENT APPLICATION

(11) **EP 1 206 066 A2**
(43) Date of publication of application: **15.05.2002**
(21) Application number: 01309426.3
(22) Date of filing: 07.11.2001
(51) Int. Cl.: H04L 9/32

(54) **Method for determining whether past digital signatures were issued by suspended certificates**

(30) Priority: 09.11.2000 US 711119
(71) Applicant: International Business Machines Corporation, Armonk, NY 10504 (US)
(72) Inventor: Gindin, Thomas Lee, c/o IBM United Kingdom Ltd,, Winchester, Hampshire SO21 2JN (GB)
(74) Representative: Burt, Roger James, Dr.

(57) **Abstract**

A method and system for indicating whether a public-key certificate had, at one time, been suspended. The method comprises the steps of, when a public key certificate is suspended, listing the certificate in a given field on a certificate revocation list; and if the suspension of the public key certificate is ended, then (1) changing the listing of the certificate in said given field from "suspended" to "resumed," and (2) listing the period of suspension of the certificate in a suspension history field within the listing of the said certificate on the certificate revocation list. Preferably, the suspension history field lists only certificates whose suspensions ended after a defined time; and this defined time is identified in a defined field on the certificate revocation list. Also, with the preferred embodiment, the listing step includes the step of identifying in the suspension history field the period of suspension of the certificate.

## Description

### Background Of The Invention

### Field of the Invention

The present invention relates generally to secure communications, and more particularly to schemes for certificate management

### Prior Art

Public-key cryptography now plays a major role in cryptographic solutions in the field of information security. With this procedure, an encryption algorithm, for example, is parameterized by a pair of related numbers, known as a private key and a public key. The public key, known to everyone, allows anyone to encrypt a message for a specific intended recipient; and the private key, known only to the intended recipient, allows only that individual to decrypt the message.

Public keys are typically distributed by means of public-key certificates (ITU Recommendation X.509:1993, hereafter [X.509]). A public-key certificate includes a user's distinguishing name, the public key to be associated with that name, and the digital signature of a trusted third party (commonly called the certification authority or CA) which binds the name to the key. The certificate usually also contains additional fields, including a validity period, and a serial number which uniquely identifies all certificates from one certification authority. Effectively, the signature serves as the trusted party's guarantee that the key is associated with the specified user. When other system users successfully verify, using standard techniques, that a certificate signature is correct, they may then be reasonably assured that the public key in the certificate is authentic, and may safely proceed to use the public key within for appropriate cryptographic applications.

Public key certificates are typically stored in public databases commonly referred to as directories [X.509]. The validity period in a certificate implies a default expiry date of the certificate, after which time all users should treat the binding between the key and user as invalid. If the certification authority which signed the certificate decides, for some reason, to retract its endorsement of the public key prior to the normal expiry date, some method is followed to revoke or suspend the certificate. Reasons for revoking certificates may include compromise or suspected compromise of the corresponding private key, or early termination of the need for the key.

One method of certificate revocation involves use of a certificate revocation list or CRL. A CRL according to [X.509] includes a list of zero or more pairs of data items, each pair indicating a certificate serial number and the time or date at which the certificate was revoked. The composite list also includes a date of issue or validity period, and is digitally signed by the certification authority to ensure authenticity. Typically, a single CRL (or family of CRL's defined by reason code) is associated with a set of certificates issued by each certification authority, and the CRL is updated at regular intervals (e.g. daily or weekly). Before extracting for use any public key from a certificate, prudent system users verify the signature on the certificate, that the current time precedes the expiry date therein, and that the serial number of the certificate in question does not appear on the most recent valid CRL.

A certificate contains the dates during which it is operational. During its operational period, a certificate is valid unless it has been suspended or revoked. A suspension is a temporary hold that is placed on a certificate. If a certificate is revoked, the operational period of the certificate is permanently terminated from the time of revocation forward. After its operational period, a certificate is considered to be expired. A CA reports the state of a certificate that has been revoked or suspended in a certificate revocation list.

When a Certificate is suspended, it is listed on a CRL, and later if that suspension is ended, the Certificate is removed from the CRL. At present, there is no simple and practical way to determine, after the suspension of a Certificate has been ended, whether the Certificate was or was not suspended at a particular earlier time. This substantially limits the usefulness of temporary suspensions of Certificates.

### Summary Of The Invention

An object of this invention is to provide a method and system for determining whether past digital signatures were issued by suspended Certificates.

Another object of the present invention is to make the temporary suspension of non-repudiated Certificates practical and useful.

A further object of this invention is to provide a data structure within a Certificate Revocational List to record the history of data suspensions.

Most digitally signed documents are signed using private keys belonging to key pairs whose public member is certified by an X.509 certificate (see ITU standard X.509 or ISO standard 9594 for details). Part of the verification of such a signature involves checking a Certificate Revocation List (CRL) issued by a Certificate Authority (CA) which is ordinarily the same CA as issued the user's certificate. In accordance with this invention, a Certificate Suspension History (CSH) is provided to record the history of certificate suspensions within an X.509 CRL, thus enabling a subsequent verifier to check whether a certificate was suspended at the time a given transaction took place. The CSH is incorporated within the CRL as a CRL Entry Extension, an existing data structure defined by X.509 version 3. Whenever a certificate suspension is removed, the Certificate Authority is responsible for adding a Certificate Suspension Entry to the CRL governing the newly resumed certificate, containing the period of suspension and optionally the reason as well. The Certificate Suspension History consists of a sequence of Certificate Suspension Entries.

To permit inferences from the absence of any Certificate Suspension History from A CRL, an additional CRL Extension (not a CRL Entry Extension) known as Suspension History Usage (SHU) is defined, which may optionally contain a time. If this extension is present with a time, all suspensions ending since that time may safely be assumed to be recorded in Certificate Suspension Histories. If it is present without a time, all suspensions affecting certificates governed by the CRL may safely be assumed to be recorded in Certificate Suspension Histories.

Further benefits and advantages of the invention will become apparent from a consideration of the following detailed description, given with reference to the accompanying drawings, which specify and show preferred embodiments of the invention.

### Brief Description Of The Drawings

Figure 1 provides an example of a public key certificate.

Figure 2 illustrates the format of a CRL report.

Figures 3, 4 and 5 illustrate a flow chart showing a procedure for determining whether a nonexpired certificate had been suspended at an earlier time.

Figure 6 is a description of extensions used in the preferred implementation of this invention.

### Detailed Description Of The Preferred Embodiments

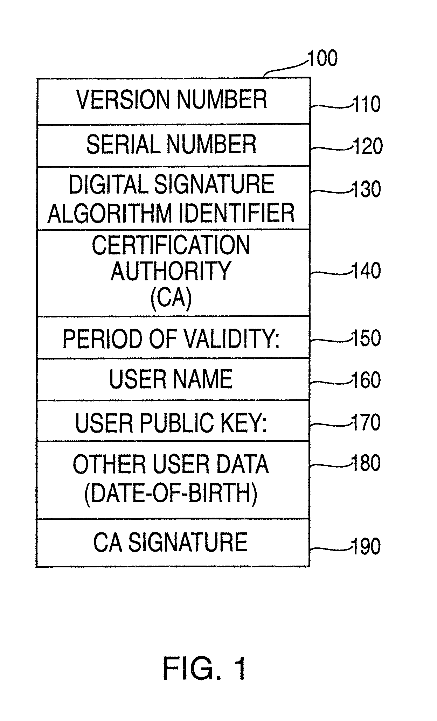

Figure 1 provides an example of a public key certificate. Certificate 100 contains a Version Number 110 that identifies the certificate format. Serial Number 120 is unique within a particular CA and identifies certificate 100. Digital Signature Algorithm identifier 130 identifies the algorithm used to create signature 190 and any parameters needed for the specified algorithm. Issue Name 140 identifies the Certificate Authority which issued certificate 100 and signed it with Signature 190.

Period of Validity 150 specifies the dates in which certificate 100 is operational (i.e., in its operational period). Certificate 100 is not valid until a certain date and become invalid after a certain date. Certificate 100 also contains information associated with a user. In particular, the user's identification (e.g., name) is contained in User Name 160, and the user's public key is contained in the certificate in User Public Key 170. The certificate may also contain Other User Data 180, such as Email address or date of birth of the user.

Signature 190 is used by a recipient to authenticate certificate 100. Signature 190 can be generated using a number of different techniques. For example, signature 190 can be the result of computing a message digest of fields 110-180 of certificate 100, and encrypting the message digest using the CA's private key. The CA's public key is used to verify the signature of certificate 100.

A certificate is valid during its operational period. Before or after its operational period, the certificate should not be used. As described above, a certificate can become unusable (e.g., revoked or suspended) during its operational period. For example, a user's private key can become compromised. Since the certificate contains the public key, the certificate should not be used.

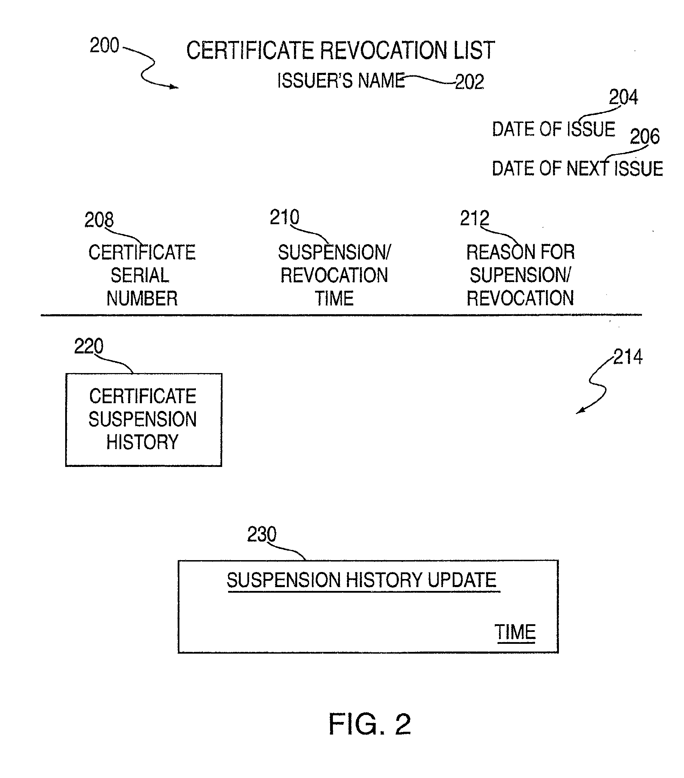

To render a certificate unusable, the CA revokes or suspends the certificate. On a periodic basis, a CA issues a CRL that identifies the certificates that have been revoked or suspended since the last CRL was issued. Figure 2 provides an example of a CRL report format. CRL 200 contains the name of the issuer of the CRL 202, the date of the CRL's issuance 204, and the date of the next CRL issuance 206.

An entry for each certificate that has been revoked or suspended since the last issued CRL is contained in area 214 of the report. Each entry contains the Certificate Serial Number 208, the Suspension or Revocation date and time 210, and possibly the reason for the suspension or revocation (e.g., private key is compromised) 212.

Each entry's Certificate Serial Number 208 in area 214 must be reviewed to determine whether a specific certificate is included in CRL 200. Area 214 can contain one or more entries. CRL 200 could be multiple pages.

The Certificate Suspension History (CSH) 220 is provided to record the history of certificate suspensions within an X.509 CRL, thus enabling a subsequent verifier to check whether a certificate was suspended at the time a given transaction took place. The CSH is incorporated within the CRL as a CRL Entry Extension, an existing data structure defined by X.509 version 3. Whenever a certificate suspension is removed, the Certificate Authority is responsible for adding a Certificate Suspension Entry to the CRL governing the newly resumed certificate, containing the period of suspension and optionally the reason as well. The Certificate Suspension History consists of a sequence of Certificate Suspension Entries.
To permit inferences from the absence of any Certificate Suspension History from A CRL, an additional CRL Extension (not a CRL Entry Extension) known as Suspension History Usage (SHU) 230 is defined, which may optionally contain a time. If this extension is present with a time, all suspensions ending since that time may safely be assumed to be recorded in Certificate Suspension Histories. If it is present without a time, all suspensions affecting certificates governed by the CRL may safely be assumed to be recorded in Certificate Suspension Histories.

The Certificate Suspension History occurs within area 214 (the CRL Entry), as do items 208-212 inclusive. The Suspension History Usage occurs within a separate area global to all CRL entries at the end of the CRL, unlike any other field documented here.

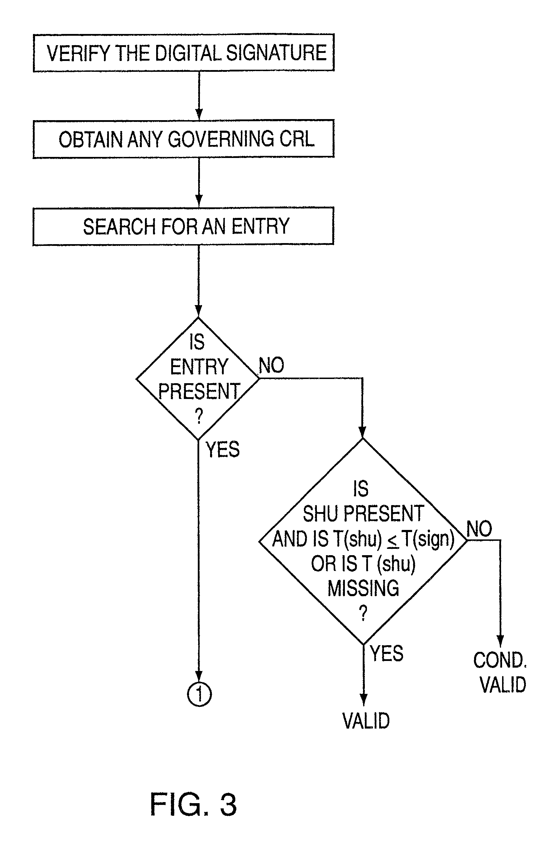

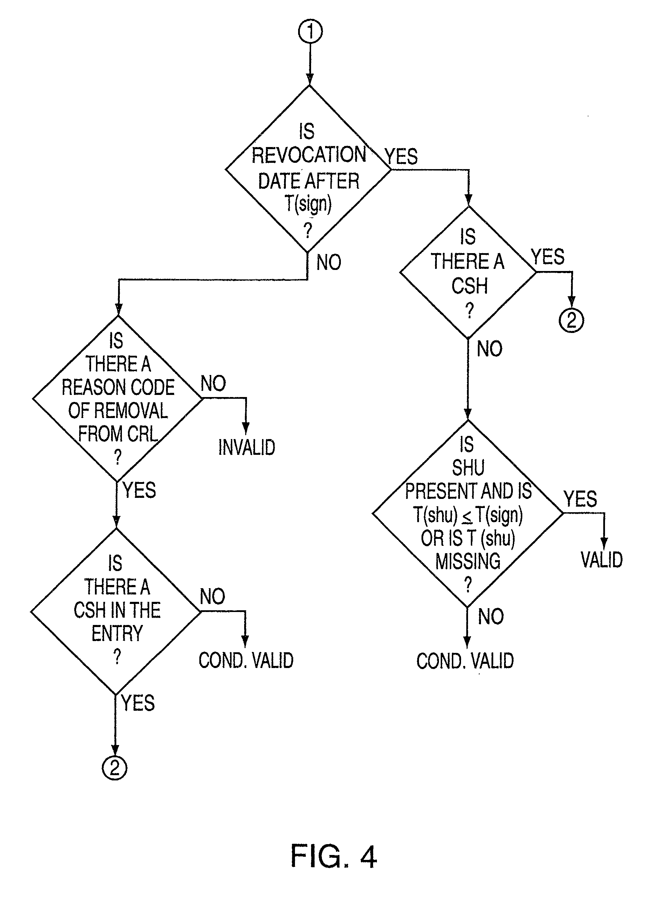

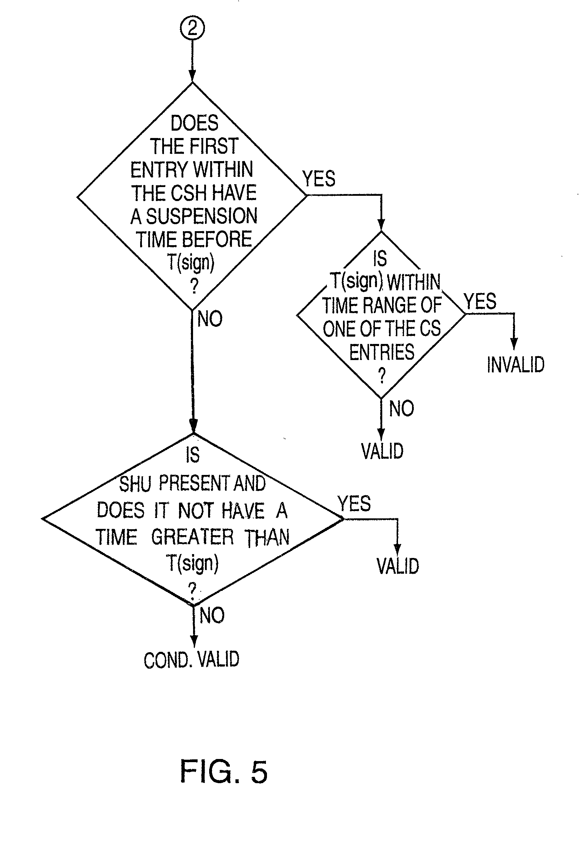

The recording of a Certificate Suspension History permits verifications of timed digital signatures using current CRL's to determine accurately whether the signature was created by a key whose certificate was suspended. This makes the temporary suspension of non-repudiation certificates practical and useful. With reference to Figures 3-5, a verifier can follow the following heuristic for any non-expired certificate:
1. Verify the digital signature on the document using the public key in the certificate.
2. Obtain any CRL governing that certificate dated between the time of the signature and the present.
3. Search for an entry with the same certificate serial number as the certificate.
4. If no entry for this certificate is present, return VALID if the SuspensionHistoryUsage extension is present and does not have a time later than the time of the signature; otherwise return CONDITIONALLY_VALID.
5. If an entry for this certificate is present with a revocation date no later than the time of the signature without a reason code of removeFromCRL, return INVALID.
6. If an entry for this certificate is present with a revocation date after the time of the signature, and there is no Certificate Suspension History within it, return VALID if the SuspensionHistoryUsage extension is present and does not have a time later than the time of the signature; otherwise return CONDITIONALLY_VALID.
7. If an entry for this certificate is present and contains a Certificate Suspension History whose first entry has a suspension time before the time of the signature, return INVALID if the time of the signature is within the time range of one of the Certificate Suspension Entries; otherwise return VALID.
8. If an entry for this certificate is present and contains a Certificate Suspension History whose first entry does not have a suspension time before the time of the signature, return VALID if the SuspensionHistoryUsage extension is present and does not have a time later than the time of the signature; otherwise return CONDITIONALLY_VALID.
9. If an entry for this certificate is present with a revocation date no later than the time of the signature with a reason code of removeFromCRL but without a Certificate Suspension History, return CONDITIONALLY_VALID.

Without the use of the two extensions defined in this invention, the strongest validation possible is equivalent to the CONDITIONALLY_VALIDreturns from steps 4, 6 and 9.

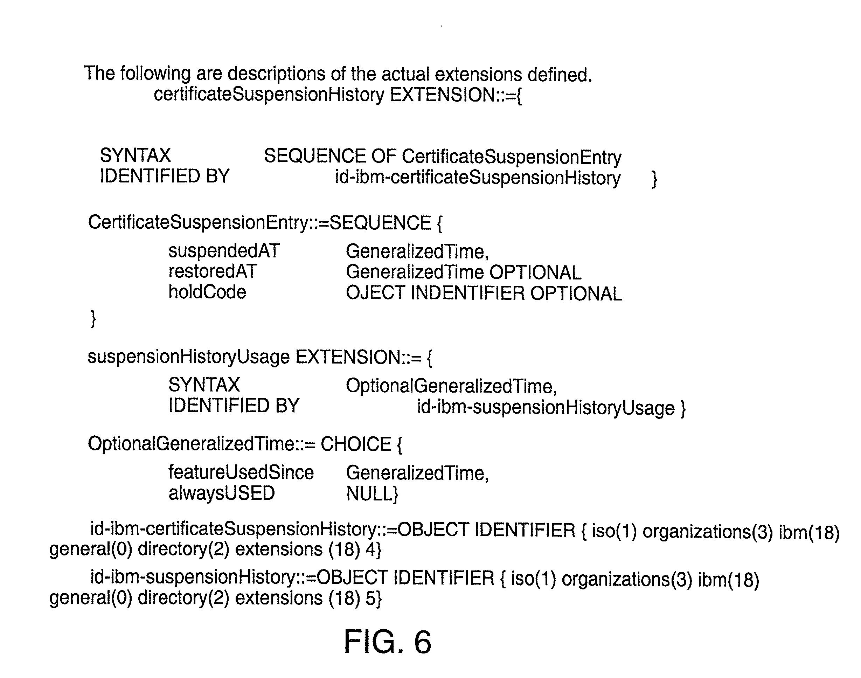

Figure 6 provides descriptions of the actual extensions defined.

While it is apparent that the invention herein disclosed is well calculated to fulfill the objects stated above, it will be appreciated that numerous modifications and embodiments may be devised by those skilled in the art, and it is intended that the appended claims cover all such modifications and embodiments as fall within the true spirit and scope of the present invention.

## Claims

1. A method of indicating whether a public-key certificate had, at one time, been suspended, comprising:
when a public key certificate is suspended, listing the certificate in a given field on a certificate revocation list; and
if the suspension of the public key certificate is ended, then (1) changing the listing of the certificate in said given field from "suspended" to "resumed," and (2) listing the period of suspension of the certificate in a suspension history field within the listing of the said certificate on the certificate revocation list.

2. A method according to Claim 1, further comprising the steps of:
maintaining in the suspension history field, lists of only certificates whose suspensions ended after a defined time; and
identifying the defined time in a defined field on the certificate revocation list.

3. A method according to Claim 1, wherein the listing step includes the step of identifying in the suspension history field the period of suspension of the certificate.

4. A system for indicating whether a public-key certificate had, at one time, been suspended, comprising:
means for listing a public key certificate in a given field on a certificate revocation list when the certificate is suspended; and
means for, if the suspension of the public key certificate is ended, (1) changing the listing of the certificate in said given field from "suspended" to "resumed," and (2) listing the period of suspension of the certificate in a suspension history field within the listing of the said certificate on the certificate revocation list.

5. A system according to Claim 4, wherein:
the suspension history field lists only certificates whose suspensions ended after a defined time; and
the defined time is identified in a defined field on the certificate revocation list.

6. A system according to Claim 3, wherein the means for listing includes means for identifying in the suspension history field the period of suspension of the certificate.

7. A program storage device readable by machine, tangibly embodying a program of instructions executable by the machine to perform method steps for indicating whether a publickey certificate had, at one time, been suspended, said method steps comprising:
when a public key certificate is suspended, listing the certificate in a given field on a certificate revocation list; and
if the suspension of the public key certificate is ended, then (1) changing the listing of the certificate in said given field from "suspended" to "resumed," and (2) listing the period of suspension of the certificate in a suspension history field within the listing of the said certificate on the certificate revocation list.

8. A program storage device according to Claim 7, wherein said method steps further comprise:
maintaining in the Suspension history field, lists of only certificates whose suspensions ended after a defined time; and
identifying the defined time in a defined field on the certificate revocation list.

9. A program storage device according to Claim 7, wherein the listing step includes the step of identifying in the suspension history field the period of suspension of the certificate.

10. A method of checking to determine whether a public key certificate issued by a certificate authority had been suspended, wherein the certificate authority issues a certificate revocation list identifying suspended certificates in a given field, and, when a suspension of a certificate is ended, the certificate authority removes the listing of the certificates from said given field and lists the certificate in a suspension history field of the certificate revocation list, said method comprising the steps:
obtaining the certificate revocation list; and
searching the suspension history field of the certificate revocation list for an entry for the certificate.

11. A method according to Claim 10, wherein the suspension history field lists only certificates whose suspensions ended after a defined time, and the defined time is identified in a defined field on the certificate revocation list, and wherein said method further comprises the step of checking said time to draw an inference that, if the certificate is not listed in the suspension field, the certificate has been suspended after said time.
